Europäisches Patentamt

European Patent Office

Office européen des brevets

(11) Veröffentlichungsnummer: **0 001 297**
**B1**

(12) **EUROPÄISCHE PATENTSCHRIFT**

(45) Veröffentlichungstag der Patentschrift: **14.10.81**

(21) Anmeldenummer: **78200008.7**

(22) Anmeldetag: **01.06.78**

(51) Int. Cl.³: **G 05 B 19/33, B 60 N 1/02**

(54) Einrichtung zur Positionierung wenigstens zweier Verstellvorrichtungen, insbesondere für Kraftfahrzeugsitze.

(30) Priorität: **29.07.77 DE 2734264**
**28.04.78 DE 2818806**

(43) Veröffentlichungstag der Anmeldung:
**04.04.79 Patentblatt 79/7**

(45) Bekanntmachung des Hinweises auf die Patenterteilung:
**14.10.81 Patentblatt 81/41**

(84) Benannte Vertragsstaaten:
**DE FR GB SE**

(73) Patentinhaber: **ROBERT BOSCH GMBH**
**Postfach 50**
**D-7000 Stuttgart 1 (DE)**

(72) Erfinder: **Fleischer, Helmut, Ing. Grad.**
**Hermann-Essig-Strasse 106**
**D-7141 Schwieberdingen (DE)**
Erfinder: **Schneider, Erich, Dipl.-Ing.**
**Entengasse 14**
**D-7125 Kirchheim (DE)**

(56) Entgegenhaltungen:
**DE - A - 2 119 837**
**DE - A - 2 554 059**
**DE - A - 2 640 528**
**DE - B - 2 412 550**
**US - A - 3 597 554**
**US - A - 3 984 146**
**US - A - 4 077 000**

**CONTROL, Vol. 11, März 1967, Nr. 105,
London
"Stepping motor with closed-loop control", Seite
129**

**ELEKTROMEDICA, Vol. 40, Nr. 1, 1972
SIEMENS K. SIEDE "T3- ein Zahnärztlicher
Operationsstuhl, mit Gedächtnis",
Seiten 29—32**

Einrichtung zur Positionierung wenigstens zweier Verstellvorrichtungen,
insbesondere für Kraftfahrzeugsitze

Stand der Technik und Aufgabe

Die Erfindung geht aus von einer Einrichtung nach der Gattung des Hauptanspruchs. Es ist schon eine solche Einrichtung aus der US - A - 3 984 146 bekannt, bei der jede Verstellvorrichtung über zwei Endstufen für je eine Verstellrichtung gesteuert wird. Bei einer Vielzahl von Verstellvorrichtungen führt dies zu einem großen Aufwand an großen und teuren Steuerendstufen. Bei Verwendung moderner Mikroelektronik verbleiben nämlich üblicherweise nur noch die Endstufen als diskrete Bauelemente, die im wesentlichen das Volumen und den Preis des Steuergeräts bestimmen.

Die Erfindung stellt sich daher die Aufgabe, den Aufwand für Steuerendstufen, insbesondere bei mehreren Verstellvorrichtungen, zu reduzieren.

Darstellung der Erfindung

Die erfindungsgemäße Einrichtung mit den kennzeichnenden Merkmalen des Hauptanspruchs hat den Vorteil, daß für jede Verstellvorrichtung nur noch eine einzige Steuerendstufe zuzüglich einer weiteren Steuerendstufe für die Richtungsumschaltung für alle Verstellvorrichtungen benötigt wird. Dies bedeutet insbesondere bei vielen Verstellvorrichtungen praktisch eine Halbierung der Zahl der Steuerendstufen und damit eine deutliche Reduzierung an Volumen und Preis.

Durch die in den Unteransprüchen aufgeführten Maßnahmen sind vorteilhafte Weiterbildungen und Verbesserungen der im Hauptanspruch angegebenen Einrichtung möglich.

Zeichnung

Zwei Ausführungsbeispiele der Erfindung sind in der Zeichnung dargestellt und in der nachfolgenden Beschreibung näher erläutert. Es zeigen Fig. 1 die schaltungsmäßige Ausgestaltung eines ersten Ausführungsbeispiels, Fig. 2 eine Schaltungsanordnung zur direkten manuellen Betätigung der Verstellvorrichtung, Fig. 3 eine Momentanwertspeichervorrichtung, Fig. 4 die schaltungsmäßige Ausgestaltung eines zweiten Ausführungsbeispiels, Fig. 5 eine Schaltungsanordnung zur sequenziellen Ansteuerung der Verstellvorrichtungen, Fig. 6 eine Überwachungsschaltung für die Verstellgeschwindigkeit und Fig. 7 eine Schaltungsanordnung zur Steuerung mehrerer Verstellvorrichtungen durch jeweils eine Steuerendstufe.

Beschreibung der Erfindung

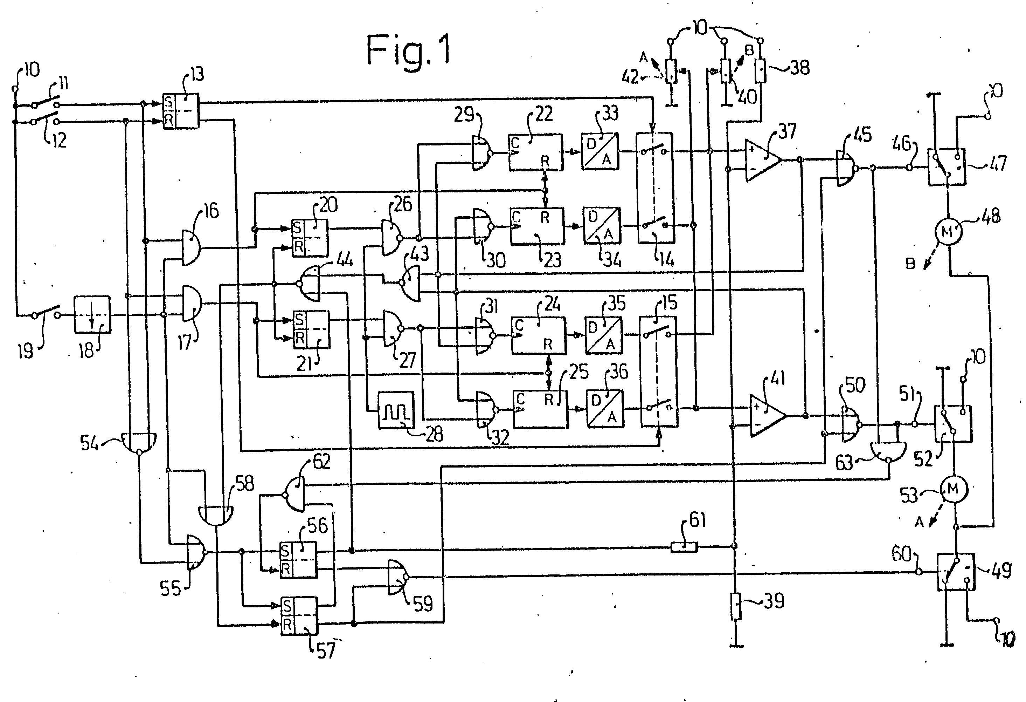

In dem in Fig. 1 dargestellten Ausführungsbeispiel ist eine mit dem positiven Pol einer Versorgungsspannungsquelle verbundene Klemme 10 über zwei, als Tastschalter ausgebildete Positionier-Schaltglieder 11, 12 mit dem Setzeingang S und dem Rücksetzeingang R eines Flipflops 13 verbunden, das als Signalspeicheranordnung bei der Betätigung der Positionier-Schaltglieder 11, 12 dient. Sind zur Auslösung mehrerer Positionen weitere Tastschalter vorgesehen, so kann anstelle eines Flipflops ein (Mehrfach-) Latch verwendet werden, das z.B. als Bauteil CD4042 der Fa. RCA im Handel ist. Die beiden komplementären Ausgänge des Flipflops 13 sind mit Steuereingängen zweier Schaltvorrichtungen 14, 15 verbunden, die je zwei Schalter aufweisen. Für solche Schaltvorrichtungen 14, 15 kann z.B. das im Handel erhältliche Bauteil 4016 der Fa. RCA eingesetzt werden. Durch Aneinanderreihung solcher Bauteile 4016 können eine praktisch beliebige Anzahl von Schaltern durch ein Steuersignal gleichzeitig betätigt werden.

Die beiden Eingänge des Flipflops 13 sind weiterhin mit je einem Eingang zweier UND-Gatter 16, 17 verbunden, deren jeweils zweiter Eingang mit dem Ausgang eines Zeitglieds 18 mit verzögerter Abfallflanke in Verbindung steht. Der Eingang des Zeitglieds 18 ist über ein als Tastschalter ausgebildetes Speicher-Schaltglied 19 an die Klemme 10 angeschlossen. Die Ausgänge der beiden UND-Gatter 16, 17 sind einmal je mit dem Setzeingang S zweier Flipflops 20, 21 und zum anderen mit den Rücksetzeingangen R zweier als elektrische Speichervorrichtungen für Sollwerte wirkender Zähler 22, 23 einerseits und zweier weiterer Zähler 24, 25 andererseits verbunden. Je ein Ausgang der Flipflops 20, 21 ist mit einem Eingang je eines NAND-Gatters 26, 27 verbunden, deren weitere Eingänge an einen Taktgenerator 28 angeschlossen sind. Der Ausgang des NAND-Gatters 26 ist über zwei NOR-Gatter 29, 30 mit den Takteingängen der Zähler 22, 23 und der Ausgang des NAND-Gatters 27 ist über zwei NOR-Gatter 31, 32 mit den Takteingängen der Zähler 24, 25 verbunden. Die Zählenausgänge der Zähler 22, 23 sind über je einen Digital-Analog-Wandler 33, 34 mit der Schaltvorrichtung 14 und die Zahlenausgänge der Zähler 24, 25 sind über je einen Digital-Analog-Wandler 35, 36 mit der Schaltvorrichtung 15 verbunden.

Je ein erster Ausgang der Schaltvorrichtungen 14, 15 ist mit dem nichtinvertierenden Eingang eines ersten, als Operationsverstärker ausgebildeten Regelverstärkers 37 verbunden, dessen invertierender Eingang über einen Widerstand 38 mit der Klemme 10 und über einen Widerstand 39 mit Masse verbunden ist. Der nichtinvertierende Eingang des Regelverstärkers 37 ist weiterhin mit dem Abgriff eines vorzugsweise als Spindelpotentiometer ausgebildeten, zwischen die Klemme 10 und Masse geschalteten, als mechanisch-elektrischer Wandler wirkenden Potentiometers 40 verbunden. Je ein zweiter Ausgang der Schaltvorrichtungen 14, 15 ist mit einem als Operationsverstärker ausgebildeten Regelverstärker 41, einem ebenfalls als mechanisch-elektrischer Wandler wirkenden Potentiometer 42 sowie den als Spannungsteiler geschalteten Widerständen 38, 39 entsprechend beschaltet.

Der Ausgang des Regelverstärkers 37 ist mit je einem weiteren Eingang der NOR-Gatter 29, 31 sowie mit einem Eingang eines NAND-Gatters 43 verbunden. Der Ausgang des Regelverstärkers 41 ist mit je einem Eingang der NORgang des NAND-Gatters 43 verbunden. Der Ausgang dieses NAND-Gatters 43 ist über ein NOR-Gatter 44 mit den Rücksetzeingängen R der Flipflops 20, 21 verbunden.

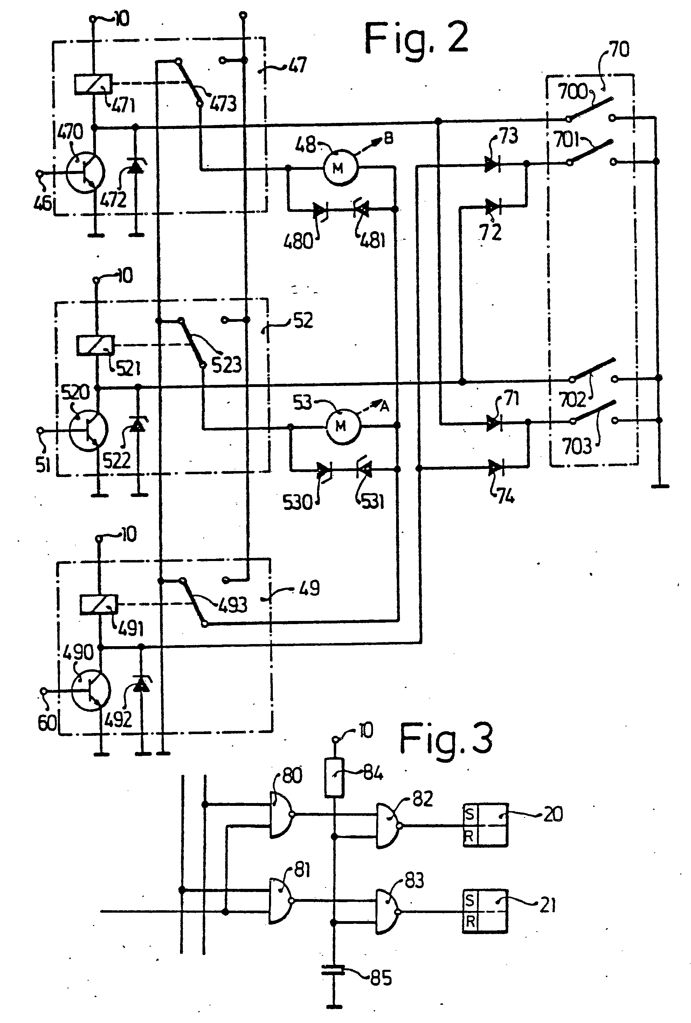

Der Ausgang des Regelverstärkers 37 ist über ein NOR-Gatter 45 mit einer Klemme 46 verbunden, die an den Steuereingang eines Umschalters 47 angeschlossen ist. Der ständig mit dem Schaltarm des Umschalters 47 verbundene Kontakt ist über eine vorzugsweise als Stellmotor 48 ausgebildete Verstellvorrichtung mit dem ständig mit dem Schaltarm in Verbindung stehenden Schaltkontakt eines weiteren Umschalters 49 verbunden. Der Ausgang des Regelverstärkers 41 ist mit einem NOR-Gatter 50, einer Klemme 51, einem Umschalter 52 sowie einem Stellmotor 53 entsprechend beschaltet. Die beiden alternativ mit dem Schaltarm in Verbindung stehenden Schaltkontakte der Umschalter 47, 49, 52 sind je einmal mit Masse und einmal mit der Klemme 10 verbunden. Eine detailliertere Darstellung der Umschalter 47, 49, 52 in Verbindung mit den Stellmotoren 48, 53 wird im Zusammenhang mit Fig. 2 noch näher erläutert. Die Stellmotoren 48, 53 sind mit den Abgriffen der Potentiometer 40, 42 mechanisch gekoppelt, was durch die gestrichelten, mit A und B bezeichneten Pfeile gekennzeichnet ist. Diese mechanische Kopplung kann in einer bevorzugten Ausführungsform darin bestehen, daß die vorzugsweise als Spindelpotentiometer ausgebildeten Potentiometer 40, 42 direkt an den Abtriebswellen der Stellmotoren angeschlossen sind. Dadurch kann für alle Verstellrichtungen ein einziger Potentiometertyp eingesetzt werden. Als weitere Ausführungsform kann eine mit der Abtriebswelle eines Stellmotors verbundene Spindel eine berührungslose Geberanordnung, vorzugsweise ein induktiver Geber, angetrieben werden.

Die beiden Eingänge des Flipflops 13 sind über ein NOR-Gatter 54 mit einem Eingang eines NOR-Gatters 55 verbunden, dessen zweiter Eingang an dem Ausgang des Zeitglieds 18 angeschlossen ist. Der Ausgang des NOR-Gatters 55 ist mit den Setzeingängen S zweier Flipflops 56, 57 verbunden. Der Ausgang des Zeitglieds 18 ist weiterhin über ein ODER-Gatter 58 mit dem Rücksetzeingang R des Flipflops 57 verbunden. Der zweite Eingang des ODER-Gatters 58 ist an dem Ausgang des NOR-Gatters 44 angeschlossen. Das Flipflop 57 dient der Freigabe bzw. Sperrung der Verstellvorrichtungen 48, 53, wozu ein Ausgang dieses Flipflops 57 mit je einem weiteren Eingang der NOR-Gatter 45, 50 verbunden ist. Weiterhin ist dieser Ausgang mit einem Eingang eines NOR-Gatters 59 verbunden. Das andere Flipflop 56 dient zur Vorgabe der Verstellrichtung der Verstellvorrichtungen 48, 53, und ein Ausgang ist über das NOR-Gatter 59 mit einer Klemme 60 verbunden, die an dem Steuereingang des Umschalters 49 angeschlossen ist. Der komplementäre Ausgang des Flipflops 56 ist sowohl mit einem Eingang des NOR-Gatters 44, wie auch über einen Widerstand 61 mit den invertierenden Eingängen der Regelverstärker 37, 41 verbunden. Der komplementäre Ausgang des Flipflops 57 ist über ein NAND-Gatter 62 mit dem Rücksetzeingang R des Flipflops 56 verbunden. Die Klemmen 46, 51 sind über ein NAND-Gatter 63 mit einem weiteren Eingang des NAND-Gatters 62 verbunden.

Die Wirkungsweise der in Fig 1 dargestellten Anordnung besteht darin, daß bei einer verstellbaren Anordnung, z.B. bei einem Kraftfahrzeugsitz, durch Stellmotoren 48, 53 eine bestimmte Position eingestellt und durch Betätigung der Positionier-Schaltglieder 11, 12 immer wieder automatisch angefahren werden kann. So dient der Stellmotor 48 z.B. der Vorwärts-Rückwärts-Verstellung des Sitzes und der Stellmotor 53 zur Verstellung der Neigung der Lehne. Weitere Stellmotoren können zur Höhenverstellung und zur Neigungsverstellung vorgesehen werden. Die Positionier-Schaltglieder 11, 12 können bestimmten Personen, bzw. von diesen eingestellten Positionen zugeordnet sein. Ein Positionier-Schaltglied 11, 12 kann z.B. auch als Türkontakt eines Fahrzeugs ausgebildet sein. Dieses Positionier-Schaltglied kann auf eine sparsamer ausgebildete Speichervorrichtung und nur auf einen einzigen Stellmotor zur Sitzverstellung in Vorwärts-Rückwärts-Richtung wirken. Eine Sitzverstellung soll bei Betätigung dieses Positioner-Schaltglieds nur in Rückwärts-Richtung ausgeführt werden, vorzugsweise bis zu einer Mittelstellung, um den Einstieg für größere Personen zu erleichtern, wenn vorher eine kleinere Person ihre Sitzposition eingestellt hat. Die Erfindung ist jedoch nicht nur auf Kraftfahrzeugsitze beschränkt, sondern kann auch zur Verstellung weiterer beweglicher Anordnungen, wie z.B. Rückspiegel oder Lenkrad, herangezogen werden.

Soll eine bestimmte, tatsächlich vorliegende Position der Stellmotoren 48, 53, bzw. die entsprechende Position eines Sitzes gespeichert werden, so muß zunächst das Speicher-Schaltglied 19 und danach eines der Positionier-Schaltglieder 11, 12 betätigt werden, je nachdem, durch welches der beiden Positionier-Schaltglieder die entsprechende Stellung später abgerufen werden soll. Ist dies z.B. das Positionier-Schaltglied 11, so wird das Flipflop 13 gesetzt, die Schalter der Schaltvorrichtung 14 geschlossen und die Schalter der Schaltvorrichtung 15 geöffnet. Dadurch werden die Zähler 22, 23 wirksam, die Zähler 24, 25 dagegen nicht. Da das Signal des Speicher Schaltglieds 19 durch das Zeitglied 18 für einige Zeit aufrechterhalten bleibt, liegen für kurze Zeit am UND-Gatter 16 gleichzeitig Signale an, wodurch das Flipflop 20 gesetzt und die Zähler 22, 23 rückgesetzt werden. Über das NAND-Gatter 26 können Signale des Taktgenerators 28 sowohl über das NOR-Gatter 29 zum Zähler 22, wie auch über das NOR-Gatter 30 zum Zähler 23 gelangen. Die Taktsignale werden dort aufsummiert. Der Zählerstand der Zähler 22, 23 wird durch die D/A-Wandler 33, 34 in analoge Signale umgewandelt, die über die Schaltvorrichtung 14 jeweils an den Regelverstärkern 37, 41 anliegen. Diese analogen Werte werden durch die Stellung der Potentiometer 40, 42 beeinflußt. Ist Gleichheit der Eingangsspannungen bei einem der Regelverstärker 37, 41 erreicht bzw. geringfügig überschritten, so gibt der entsprechende Regel verstärker 37 oder 41 ein Ausgangssignal ab, durch das das zugehörige NOR-Gatter 29 oder 30 für weitere Taktsignale gesperrt wird. Der entsprechende Zähler 22, 23 bleibt auf der erreichten Zählerstand stehen. Liegen am Ausgang beider Regelverstärker 37, 41 Ausgangssignale an, so wird über das NAND-Gatter 43 und das NOR-Gatter 44 das Flipflop 20 rückgesetzt. Der Einspeichervorgang ist beendet. Während jedes Einspeichervorgangs bleiben die Flipflops 56, 57 rückgesetzt, da das Ausgangssignal des Zeitglieds 18 das NOR-Gatter 55 für Signale der Positionier-Schaltglieder 11, 12 sperrt. Dadurch liegen über dem Ausgang des Flipflops 57 an je einem Eingang der NOR-Gatter 45, 50, 59 ein 1-Signal, wodurch an den Klemmen 46, 51, 60 0-Signale anliegen, durch die die Umschalter 47, 52 49 in den eingezeichneten Stellungen beharren. Die Stellmotoren 48, 53 sind stromlos.

Zur Erläuterung des Verstellvorgangs sei davon ausgegangen, daß zwei Positionen in den Zählern 22 bis 25 eingespeichert sind, die durch die beiden Positionier-Schaltglieder 11, 12 abgerufen werden können. Ein durch die Stellmotoren 48, 53 gesteuerter Sitz befindet sich in einer Position, die dem Speicherinhalt der Zähler 22, 23 entspricht und der das Positionier-Schaltglied 11 zugeordnet ist. Nun wird das Positionier-Schaltglied 12 betätigt. Das Flipflop 13 wird rückgesetzt, die Schalter der Schaltvorrichtung 14 geöffnet und die Schalter der Schaltvorrichtung 15 geschlossen. Gleichzeitig werden durch die Betätigung des Positionier-Schaltglieds 12 über die NOR-Gatter 54, 55 die beiden Flipflops 56, 57 gesetzt. Der mit den NOR-Gattern 45, 50, 59 verbundene Ausgang des Flipflops 57 wechselt auf ein 0-Signal. Es sei weiterhin davon ausgegangen, daß aufgrund der gespeicherten Werte in den Zählern 24, 25 und der tatsächlichen Position des Sitzes, die sich durch eine bestimmte Stellung der Potentiometer 40, 42 äußert, der nichtinvertierende Eingang des Regelverstärkers 37 positiver als der zugehörige invertierende Eingang und der nichtinvertierende Eingang des Regelverstärkers 41 negativer als der zugehörige invertierende Eingang ist. Das dadurch entstehende 1-Signal am Ausgang des Regelverstärkers 37 wird als 0-Signal auf die Klemme 46 übertragen, wodurch der Umschalter 47 seinen derzeitigen Schaltzustand beibehält. Das negative Ausgangssignal des Regelverstärkers 41 wird als 1-Signal an die Klemme 51 übertragen, wodurch der Umschalter 52 den Stellmotor 53 mit der Klemme 10 verbindet. Durch ein 1-Signal an der Klemme 60 wechselt der Umschalter 49 ebenfalls seinen Schaltzustand, so daß der Stellmotor 53 beidseitig mit der Klemme 10 verbunden ist und nicht in Aktion tritt, während der Stellmotor 48 zu laufen beginnt. Hat dieser Stellmotor 48 seine vorbestimmte Position erreicht, liegen also gleiche Signale an den Eingängen des Regelverstärkers 37 an, so wechselt sein Ausgang auf ein 0-Signal, an der Klemme 46 liegt ein 1-Signal an und der Umschalter 47 wechselt seinen Schaltzustand. Der Stellmotor 48 stoppt.

Da nunmehr an beiden Klemmen 46, 51 1-Signale anliegen, wird über die NAND-Gatter 63, 62 das Flipflop 56 rückgesetzt. Dadurch wird über das NOR-Gatter 59 an die Klemme 60 ein 0-Signal gelegt, durch das der Umschalter 49 wieder seinen ursprünglichen, in der Zeichnung dargestellten Schaltzustand einnimmt. Durch das 1-Signal am Ausgang des Flipflops 56, der mit dem Widerstand 61 in Verbindung steht, wird das Potential an den invertierenden Eingängen der Regelverstärker 37, 41 um einen sehr kleinen Betrag verändert, der jedoch ausreicht, um ein 1-Signal am Ausgang des Regelverstärkers 37 und damit ein 0-Signal an der Klemme 46 erzeugen, durch das der Umschalter 47 betätigt wird und wiederum in den ursprünglichen, in der Zeichnung dargestellten Schaltzustand zurückfällt. Der Stellmotor 48 liegt nunmehr beidseitig an Masse und der Stellmotor 53 setzt sich in Bewegung, da an der Klemme 51 immer noch ein 1-Signal anliegt. Die Bewegung des Stellmotors 53 dauert solange an, bis der nichtinvertierende Eingang des Regelverstärkers 41 positiver als der entsprechende invertierende Eingang wird, wodurch am Ausgang ein 1-Signal und an der Klemme 51 ein 0-Signal entsteht. Der Umschalter 52 fällt in seinem ursprünglichen, in der Zeichnung dargestellten Schaltzustand zurück. Nunmehr ist der Verstellvorgang abgeschlossen. An beiden Ausgängen der Regelverstärker 37, 41 liegen 1-Signale, durch die über das NAND-Gatter 43, das NOR-Gatter 44 und das ODER-Gatter 58 das Flipflop 57 rückgesetzt wird.

Die durch die dargestellte Anordnung eröffnete Möglichkeit, zuerst alle Verstellvorgänge in einer Richtung, dann alle Verstellvorgänge in der anderen Richtung ablaufen zu lassen, wirkt sich vor allem bei einer größeren Anzahl von Stellmotoren positiv aus, da hierdurch Leistungs-Umschalter eingespart werden.

Das Rücksetzsignal am Ausgang des NOR-Gatters 44, durch das das Flipflop 57 rückgesetzt wird, und durch das das Ende des Verstellvorgangs gegeben ist, kann auch durch Betätigung des Speicher-Schaltglieds 19 während des Verstellvorgangs über das ODER-Gatter 58 erzeugt werden. Das Speicher-Schaltglied 19 wirkt somit als Notstoptaste.

Damit die in Zählern 22 bis 25 gespeicherten Werte bei Abschaltung der Stromversorgung nicht gelöscht werden, können hierfür vorzugsweise nicht flüchtige Speicher eingesetzt werden, also Zähler, die bei Abschaltung der Stromversorgung ihren jeweiligen Zählerstand beibehalten. Stehen nur flüchtige Speicher zur Verfügung, so kann vorzugsweise eine getrennte Stromversorgung vorgesehen werden. Dabei versorgt eine erste, ständig anliegende Versorgungsquelle die Speichereinheit und eine zweite, abschaltbare Versorgungsquelle die übrige Schaltung. Durch diese Anordnung kann der Stromverbrauch auf ein Minimum reduziert werden.

In der in Fig. 2 dargestellten Schaltung sind die Umschalter 47, 52, 49 in Verbindung mit den Klemmen 46, 51, 60 und den Stellmotoren 48, 53 in detaillierter Form dargestellt. Dabei ist z.B. beim Umschalter 47 die Klemme 46 mit der Basis eines Transistors 470 verbunden, dessen Emitter an Masse und dessen Kollektor über die Wicklung 471 eines Relais an die Klemme 10 angeschlossen ist. Parallel zur Schaltstrecke des Transistors 470 ist eine Freilauf- und Schutzdiode 472 geschaltet. Durch die Wicklung 471 des Relais wird ein Umschalter 473 gesteuert, der dem in Fig. 1 dargestellten Umschalters 47 entspricht. Die übrigen Umschalter 52, 49 sind entsprechend aufgebaut. Parallel zu den Stellmotoren 48, 53 sind je zwei gegeneinander geschaltete Freilauf-Z-Dioden 480, 481, bzw. 530, 531 geschaltet. Ein Steuerschalter 70 weist vier Tastschalter 700, 701, 702, 703 auf, die jeweils einseitig an Masse angeschlossen sind. Der Tastschalter 700 ist mit seinem zweiten Anschluß sowohl mit dem Kollektor des Transistors 470, wie auch über eine Diode 71 mit dem zweiten Anschluß des Schalters 703 verbunden. Der zweite Anschluß des Schalters 702 ist sowohl mit dem Kollektor des Transistors 520, wie auch über eine Diode 72 mit dem zweiten Anschluß des Schalters 701 verbunden. Weiterhin sind die zweiten Anschlüsse der Schalter 701, 703 über je eine weitere Diode 73, 74 an den Kollektor des Transistors 490 angeschlossen. Die Dioden 71 bis 74 sind dabei so gepolt, daß jeweils die Kollektoren der Dioden 72, 73 und die Kollektoren der Dioden 71, 74 miteinander verbunden sind.

Durch den Steuerschalter 70 können die beiden Stellmotoren 48, 53 in jeweils beide Verstellrichtungen manuell verstellt werden, d.h. eine Verstellung erfolgt solange einer der Tastschalter 700 bis 703 betätigt ist. Wird der Tastschalter 700 betätigt, so wird der Kollektor des Transistors 470 an Masse gelegt und ein Strom kann durch die Wicklung 471 fließen. Der Umschalter 473 wird umgelegt und der Stellmotor 48 bewegt sich in eine erste Verstellrichtung. Wird der Tastschalter 701 betätigt, so wird der Kollektor des Transistors 490 an Masse gelegt und Strom fließt durch die Wicklung 491. Nunmehr wird der Umschalter 493 umgelegt, wodurch sich der Stellmotor 48 in seiner zweiten Verstellrichtung bewegt. Da gleichzeitig über die Diode 72 auch der Kollektor des Transistors 520 an Masse gelegt wird, erfolgt eine gleichzeitige Umlegung des Umschalters 523, so daß verhindert wird, daß sich der Stellmotor 53 ebenfalls in Bewegung setzt. Entsprechend erfolgt die Auslösung des Stellmotors 53 durch die Tastschalter 702, 703.

Zur Reduzierung der Kontaktbelastung des die Verstellrichtung vorgebenden Umschalters 49, kann dieser, vor allem bei einer größeren Anzahl von Stellmotoren, mehrere Wicklungen 491 aufweisen, die parallel geschaltet sind und gemeinsam durch den Transistor 490 gesteuert werden. Eine Entkopplung gegenüber dem Transistor 490 kann durch Dioden erfolgen, was den Vorteil hat, daß gleichzeitig, z.B. durch die Tastschalter 700 bis 703, in entgegengesetzte Verstellrichtungen verstellt werden kann.

Die in Figur 3 dargestellte Schaltungsanordnung dient der Momentanwertspeicherung und tritt, falls eine solche vorgesehen werden soll, anstelle der den Flipflops 20, 21 vorgeschalteten UND-Gatter 16, 17. Die vier Eingänge der UND-Gatter 16, 17 sind nunmehr mit den vier Eingängen zweier NAND-Gatter 80, 81 verbunden deren Ausgänge jeweils über ein weiteres NAND-Gatter 82, 83 an die Setzeingänge der Flipflops 20, 21 (und Rücksetzeingänge der Zähler 22, 25) angeschlossen sind. Eine Reihenschaltung eines Widerstand 84 mit einem Kondensator 85 ist zwischen die Klemme 10 und Masse geschaltet. Der Verknüpfungspunkt zwischen dem Widerstand 84 und dem Kondensator 85 ist mit jeweils einem weiteren Eingang der NAND-Gatter 82, 83 verbunden.

Die Wirkungsweise der in Figur 3 dargestellten Anordnung in Verbindung mit Fig. 1 besteht darin, zu verhindern, daß bei erstmaligem bzw. versehentlichem Betätigen eines Positionier-Schaltglieds 11, 12 undefinierte Positionen angefahren werden und gegebenenfalls die betätigende Person eingeklemmt wird. Bei Einschalten der Versorgungsspannung liegen zunächst an den Ausgängen der NAND-Gatter 80, 81 und an den damit verbundenen Eingängen der NAND-Gatter 82, 83 1-Signale. Im ersten Augenblick, bis zur Aufladung des Kondensators 85, liegen an den mit dem Kondensator 85 verbundenen Eingängen der NAND-Gatter 82, 83 0-Signale. Durch die sich daraus ergebenden 1-Signale am Ausgang der NAND-Gatter 82, 83 werden die Flipflops 20, 21 gesetzt und die Zähler 20 bis 25 rückgesetzt. Durch den bereits beschriebenen Einspeichervorgang wird die im Augenblick vorliegende Position eingespeichert.

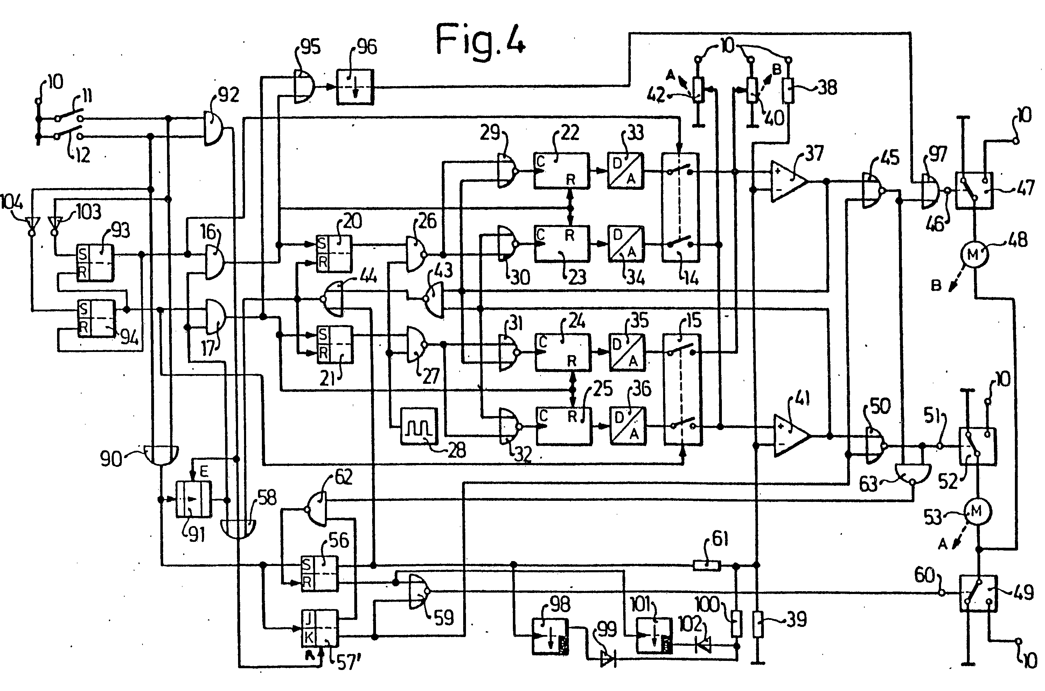

Das in Fig. 4 dargestellte zweite Ausführungsbeispiel entspricht weitgehend dem in Fig. 1 dargestellten ersten Ausführungsbeispiel. Gleich Bauteile sind mit denselben Bezugszeichen versehen und in Aufbau und Wirkungsweise nicht noch einmal beschrieben. Die bisherigen Bauteile 13, 18, 19, 54, 55 entfallen. Die einseitig an die Klemme 10 angeschlossenen Positionier-Schaltglieder 11, 12 sind über ein ODER-Gatter 90 einmal an dem Setzeingang S des Flipflops 56, weiterhin an den Takteingang des numehr als JK-Flipflop 57' ausgebildeten Flipflops 57 und schließlich an den Eingang eines Verzögerungsglieds 91 angeschlossen. Der Ausgang des Verzögerungsglieds 91 ist sowohl an einem weiteren Eingang des ODER-Gatters 58, wie auch an die miteinander verbundenen Eingänge der UND-Gatter 16, 17 angeschlossen.

Die Positionier-Schaltglieder 11, 12 sind weiterhin über ein UND-Gatter 92 sowohl mit einem weiteren Eingang des ODER-Gatters 58 wie auch mit dem Sperreingang E (Enable) des Verzögerungsglieds 91 verbunden. Schließlich sind die Positionier-Schaltglieder 11, 12 noch mit den Setzeingängen S zweier RS-Flipflops 93, 94 verbunden, wobei der Ausgang des Flipflops 93 mit dem Rücksetzeingang R des Flipflops 94, mit einem Eingang des UND-Gatters 16 und schließlich mit dem Steuereingang der Schaltvorrichtung 14 verbunden ist. Entsprechend ist der Ausgang des Flipflops 94 mit dem Rücksetzeingang R des Flipflops 93, mit einem Eingang des UND-Gatters 17 und schließlich mit dem Steuereingang der Schaltvorrichtung 15 verbunden.

Die Ausgänge der UND-Gatter 16, 17 sind über ein ODER-Gatter 95 mit dem Triggereingang eines Zeitglieds 96 verbunden, dessen Ausgang an einem Eingang eines ODER-Gatters 97 angeschlossen ist, das zwischen dem Ausgang des NOR-Gatters 45 und die Klemme 46 geschaltet ist.

Der erste Ausgang des Flipflops 56 ist mit dem dynamischen Eingang eines ersten Zeitglieds 98 verbunden, dessen erster Ausgang über die Anoden-Kathoden-Strecke einer Diode 99 und über einen in Reihe dazu geschalteten Widerstand 100 an dem Verknüpfungspunkt zwischen den Widerständen 61, 39 angeschlossen ist. Der zweite, komplementäre Ausgang des Flipflops 56 ist an den dynamischen Eingang eines zweiten Zeitglieds 101 angeschlossen, dessen komplementärer Ausgang über die Kathoden-Anoden-Strecke einer Diode 102 ebenfalls an den Widerstand 100 angeschlossen ist.

Eine wichtige Funktion des in Fig. 4 dargestellten zweiten Ausführungsbeispiels ist die Einsparung des Speicher-Schaltglieds 19, indem die Positionier-Schaltglieder 11, 12 diese Funktion mit übernehmen. Der durch die Positionier-Schaltglieder 11, 12 auslösbare Verstellvorgang erfolgt gemäß dem zweiten Ausführungsbeispiel durch Setzen der beiden Flipflops 56, 57' über das ODER-Gatter 90. Das erforderliche Ansteuern der Schaltvorrichtung 14 oder der Schaltvorrichtung 15 erfolgt in Abhängigkeit der Betätigung der beiden Positionier-Schaltglieder 11, 12 über die Flipflops 93, 94. Infolge der Inverter 103, 104, die den dynamischen Setzeingängen der Flipflops 93, 94 vorgeschaltet sind, erfolgt das Setzen dieser Flipflops mit der Rückflanke des Signals eines Positionier-Schaltglieds 11, 12, also bei dessen Loslassen. Soll nun anstelle einer Betätigung der Stellmotoren 48, 53 eine Umspeicherung in einem der Zähler 22 bis 25 erfolgen, so muß das entsprechende Positionier-Schaltglied 11, 12 mindestens so lange wie die Verzögerungszeit des Verzögerungsglieds 91 betätigt werden. Nach dieser Verzögerungszeit, bzw. nach einer entsprechend langen Betätigung eines der Positionier-Schaltglieder 11, 12 erscheint am Ausgang des Verzögerungsglieds 91 ein Signal, durch das einmal das Flipflop 57' rückgesetzt wird, sofern dies nicht ohnehin rückgesetzt ist, und weiterhin werden die UND-Gatter 16, 17 freigegeben, so daß durch das alternativ an den Ausgängen der Flipflops 93, 94 anliegende Signal eines der Flipflops 20, 21 gesetzt wird und in der bereits beschriebenen Weise der Umspeichervorgang erfolgen kann. Werden die Positionier-Schaltglieder 11, 12 gleichzeitig betätigt, so wird über das UND-Gatter 92 durch Betätigung des Rücksetzeingangs R des Flipflops 57' ein Setzen dieses Flipflops und damit eine Verstellung verhindert. Gleichzeitig wird das Verzögerungsglied 91 über den Sperreingang E gesperrt.

Wenn weitere Positionier-Schaltglieder zu 11, 12 hinzukommen, so muß anstelle des UND-Gatters 92 eine Gatter-Verknüpfung treten, die gewährleistet, daß bei Betätigung von zwei oder mehreren Schaltgliedern ein entsprechendes Ausgangssignal erzeugt wird. Ebenso muß eine logische Verknüpfung gewährleisten, daß ein Hinzukommen weiterer Flipflops zu den Flipflops 93, 94 bei Betätigung eines der Flipflops sämtliche übrige Flipflops rückgesetzt werden.

Das JK-Flipflop 57' wird vorzugsweise als T-Flipflop beschaltet, d.h. sowohl an den J- wie auch an den K-Eingang wird ein 1-Signal gelegt. In diesem Fall kippt das Flipflop mit jedem ankommenden Impuls vom ODER-Gatter 90 in die entgegengesetzte Lage, das bedeutet, mit einem kurzen Impuls eines der Positionier-Schaltglieder 11, 12 kann das Flipflop 57' gesetzt und damit ein Verstellvorgang eingeleitet werden, und mit einem weiteren Impuls desselben Positionier-Schaltglieds kann das Flipflop 57' rückgesetzt und damit der Verstellvorgang unterbrochen werden. Jedes der Positionier-Schaltglieder 11, 12 hat somit eine Notstopfunktion.

Um dem Benutzer der Anlage eine Rückmeldung zu geben, daß sein Speicherbefehl registriert, bzw. ausgeführt ist, wird durch einen der Speicherbefehle am Ausgang der UND-Gatter 16, 17 über das ODER-Gatter 95 das Zeitglied 96 gestartet. Während der sehr kurzen Haltezeit des Zeitglieds 96 wird über das ODER-Gatter 97 und den Umschalter 47 der Stellmotor 48 kurzzeitig betätigt, so daß ein kurzer Ruck, z.B. des Sitzes, diese Rückmeldung darstellt. Anstelle der kurzen Ansteuerung eines Stellmotors kann durch das Ausgangssignal des Zeitglieds 96 auch eine andere Anzeigevorrichtung, wie z.B. ein Summer oder eine Kontrolleuchte, betätigt werden.

Um die z.B. als Relaiskontakte ausgebildeten Kontakte der Umschalter 47, 52, 49 zu schonen sollte ein unnötiges Schalten vermieden werden. Dies ist z.B. dann der Fall, wenn der Verstellweg, d.h. der Unterschied zwischen Sollwert und Istwert sehr gering ist. Durch das Setzen des Flipflops 56 wird eine erste Verstellrichtung vorgegeben. Gleichzeitig wird das Zeitglied 98 gestartet. Über die Diode 99 und den Widerstand 100 wird dadurch das Sollwert-Potential an den Regelverstärkern 37, 41 um einen kleinen Betrag während der kurzen Haltezeit des Zeitglieds 98 angehoben. Dieser ersten Verstellrichtung entspricht dabei die Abnahme des Istwert-Potentials. War der Unterschied zwischen Istwert und Sollwert geringer als diese kurzzeitige Anhebung des Sollwerts, so tritt keine Verstellung ein und das Flipflop 56 schaltet gemäß dem ersten Ausführungsbeispiel auf die zweite Verstellrichtung um. Nach diesem Umschalten des Flipflops 56 bleibt das Zurückkippen des Zeitglieds 98 ohne Wirkung. Durch das Rückkippen des Flipflops 56 wird das zweite Zeitglied 101 getriggert. Durch das 0-Signal am komplementären Ausgang dieses Zeitglieds wird über die Diode 102 und den Widerstand 100 das Sollwert-Potential an den Regelverstärkern 37, 41 abgesenkt. Da dieser zweiten Verstellrichtung ein Ansteigen des Istwert-Potentials entspricht, erfolgt auch in diesem Fall kein Verstellvorgang, sofern der Sollwert-Potentialsprung größer war als die relative Differenz zwischen dem Sollwert-Potential und dem Istwert-Potential. Natürlich kann anstelle einer Veränderung des Sollwert-Potentials durch die Zeitglieder 98, 101 auch eine Veränderung des Istwert-Potentials in umgekehrter Richtung erfolgen.

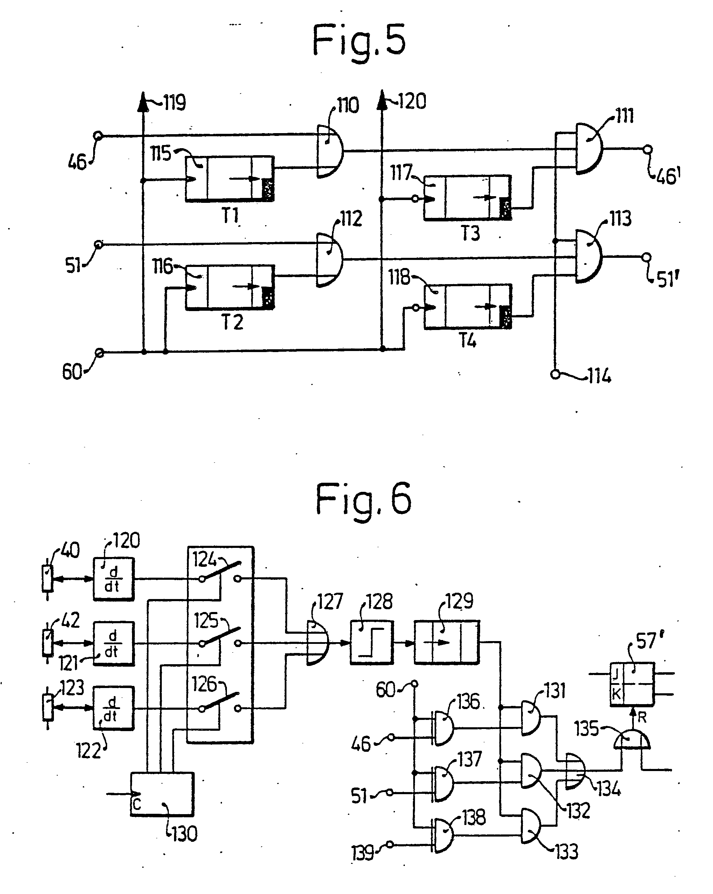

Die in Fig. 5 dargestellte Schaltungsanordnung zur sequenziellen Ansteuerung der Stellmotoren wird unter Auftrennung der Klemmen 46 und 51 zwischen die Klemmen 46, 46' bzw. 51, 51' geschaltet. Dabei ist die Klemme 46 über ein ODER-Gatter 110 mit einem Eingang eines UND-Gatters 111 verbunden, dessen Ausgang an die Klemme 46' angeschlossen ist. Ebenso ist die Klemme 51 über ein ODER-Gatter 112 mit einem Eingang eines UND-Gatters 113 verbunden, dessen Ausgang an die Klemme 51' angeschlossen ist. Eine Klemme 114, die mit dem Ausgang des Flipflops 57 bzw. 57' verbunden ist, an dem während des Verstellvorgangs ein 1-Signal anliegt, ist an je einen weiteren Eingang der UND-Gatter 111, 113 angeschlossen. Die Klemme 60 ist sowohl mit den dynamischen Eingängen zweier Verzögerungsglieder 115, 116, wie auch mit den invertierten dynamischen Eingängen zweier weiterer Verzögerungsglieder 117, 118 verbunden. Der Ausgang des Verzögerungsglieds 115 ist an einem weiteren Eingang des ODER-Gatters 110, und der Ausgang des Verzögerungsglieds 116 an einem weiteren Eingang des ODER-Gatters 112 angeschlossen. Der komplementäre Ausgang des Verzögerungsglieds 117 ist an einem weiteren Eingang des UND-Gatters 111 und der komplementäre Ausgang des Verzögerungsglieds 118 an einem weiteren Eingang des UND-Gatters 113 angeschlossen.

Die in Fig. 5 dargestellte Schaltungsanordnung wirkt sich besonders günstig bei einer größeren Anzahl von Stellmotoren 48, 53 aus. Dies ist durch die Pfeile 119, 120 angedeutet, die weitere solche Verzögerungseinrichtungen für weitere Steuerendstufen für Stellmotoren darstellen sollen. Der beim Start des Verstellvorgangs bei Vorhandensein vieler Stellmotoren hohe Einschaltstromstoß soll durch diese Schaltungsanordnung vermieden werden. Durch die Anstiegsflanke des an der Klemme 60 anliegenden Signals zur Steuerung des ersten Stellmotors werden die Verzögerungsglieder 115, 116 angesprochen, die in Abhängigkeit ihrer Verzögerungszeit nacheinander Ausgangssignale abgeben, durch die über die UND-Gatter 111, 113 Steuerendstufen kurz nacheinander eingeschaltet werden. Die UND-Gatter 111, 113 sind für diese Signale geöffnet, da an der Klemme 114 zu diesem Zeitpunkt das Steuersignal für den gesamten Verstellvorgang anliegt und auch an den komplementären Ausgängen der Verzögerungsglieder 117, 118 im Ruhezustand ständig 1-Signale bestehen. Mit der Rückflanke eines an der Klemme 60 anliegenden Signals, durch die der Beginn des Verstellvorgangs in eine zweite Richtung vorgegeben ist, werden die Verzögerungsglieder 117, 118 betätigt. Die UND-Gatter 11, 113 werden dadurch nacheinander verzögert gesperrt, so daß die Stellmotoren für die zweite Verstellrichtung ebenfalls wieder nacheinander die Bewegung aufnehmen. Die Verzögerungszeiten sind untereinander so bemessen, daß der erste Stellmotor auf seine mögliche Enddrehzahl hochlaufen kann, bevor der nächste Stellmotor zu laufen beginnt.

Die in Fig. 6 dargestellte überwachungsschaltung für die Verstellgeschwindigkeit dient zur Beendigung des Verstellvorgangs bei allen Vorgängen, bei denen eine Mindestverstellgeschwindigkeit unterschritten wird, also z.B. bei unterbrochenen Potentiometerleitungen, schwer laufenden Motoren oder wenn ein Stellmotor oder eine andere Verstellvorrichtung gegen den Anschlag gefahren wird (Schutz des Motors). Dazu werden die Istwerte für die Stellung der Verstellvorrichtungen, also die Abgriffe der Potentiometer 40, 42 Differenzierstufen 120, 121 zugeführt. Der Eingang einer dritten Differenzierstufe 122 ist mit dem Potentiometer 123 einer dritten Verstellvorrichtung verbunden. Die Ausgänge der Differenzierstufen 120 bis 122 sind über je einen Schalter 124, 125, 126 mit den Eingängen eines ODER-Gatters 127 verbunden, dessen Ausgang über eine Schwellwertstufe 128 mit dem Eingang eines Verzögerungsglieds 129 verbunden ist. Die Schalter 124 bis 126 sind mit Ausgängen eines Zählers mit eingebauter Dekodiereinrichtung 130 verbunden, an dessen Takteingang eine Taktfrequenz angelegt ist. Eine solche Dekodiereinrichtung 130 ist z.B. als Bauteil 4024 im Handel erhältlich. Der Ausgang des Verzögerungsglieds 129 ist an je einen Eingang dreier UND-Gatter 131, 132, 133 angeschlossen. Deren Ausgänge sind über ein ODER-Gatter 134 mit einem Eingang eines ODER-Gatters 135 verbunden sind, dessen Ausgang an den Rücksetzeingang des Flipflops 57', bzw. 57 angeschlossen ist. Der zweite Eingang des ODER-Gatters 135 ist mit dem Ausgang des ODER-Gatters 58 verbunden. Die Klemme 60 ist je einen Eingang dreier Exklusiv-ODER-Gatter 136, 137, 138 angeschlossen, wobei jeder Ausgang dieser Gatter 136 bis 138 an je einen weiteren Eingang der UND-Gatter 131 bis 133 angeschlossen ist. Der zweite Eingang des Gatters 136 ist mit der Klemme 46, der weitere Eingang des Gatters 137 mit der Klemme 51 und der weitere Eingang des Gatters 138 mit einer entsprechenden Klemme 139 eines dritten Stellmotors verbunden.

Die Istwertsignale werden in den Differenzierstufen 120 bis 122 differenziert und die sich daraus ergebenden, der Verstellgeschwindigkeit proportionalen Signale werden zyklisch der Schwellwertstufe 128 zugeführt. Dies geschieht dadurch, daß im Takt der angelegten Taktfrequenz der Zähler 130 ein Steuersignal zyklisch an seinen Ausgängen weiterschiebt, wodurch die Schalter 124 bis 126 zyklisch geschlossen und wieder geöffnet werden. Die Schwellwertstufe 128, die z.B. als sogenannter Fensterkomparator ausgeführt ist, gibt ein Ausgangssignal ab, wenn ein Schwellwert, der einer Mindestverstellgeschwindigkeit entspricht, unterschritten ist. Sie gibt jedoch kein Ausgangssignal ab, wenn die Verstellgeschwindigkeit Null ist, also ein weiterer, sehr niedriger Schwellwert unterschritten wird. Bei Stillstand der Stellmotoren soll die Vorrichtung nicht ansprechen. Das Ausgangssignal der Schwellwertstufe gelangt verzögert durch das Verzögerungsglied 129 an die Eingänge der UND-Gatter 131 bis 133. Ist kein Schwellwert unterschritten, so sind sämtliche UND-Gatter 131 bis 133 gesperrt. Ist ein Schwellwert unterschritten, so sind die UND-Gatter 131 bis 133 geöffnet und es wird zusätzlich geprüft, ob einer der Stellmotoren angesteuert ist. Dies ist der Fall, wenn das Signal an der Klemme 60 ungleich dem Signal an einer der Klemmen 46, 51, 139 ist. Ist kein Stellmotor angesteuert, so bleiben die UND-Gatter 131 bis 133 ebenfalls gesperrt. Ist dagegen einer der Stellmotoren eingeschaltet und erscheint gleichzeitig ein Signal, das die Unterschreitung der Mindestverstellgeschwindigkeit anzeigt, so erfolgt eine Abschaltung des Verstellvorgangs über den Rücksetzeingang des Flipflops 57' bzw. 57.

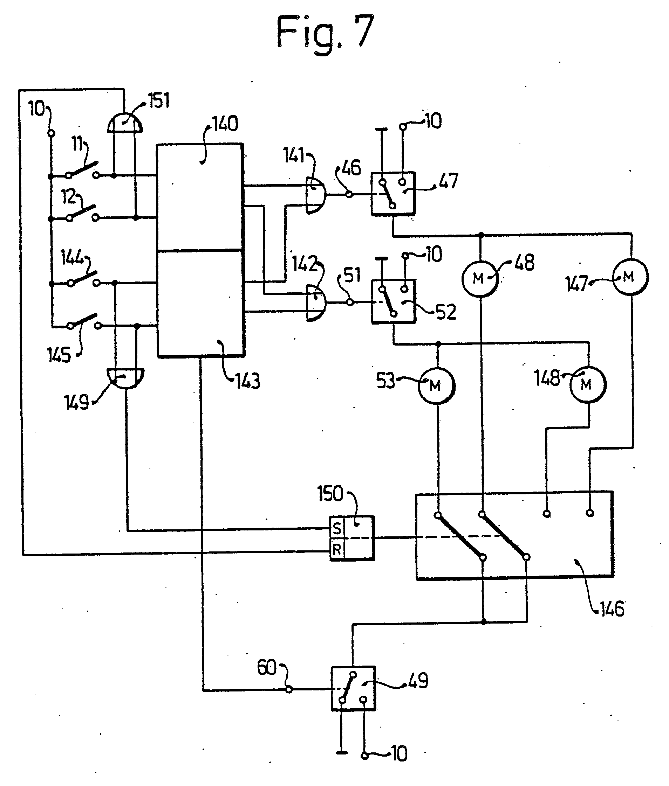

Die in Fig. 7 dargestellte Schaltungsanordnung zur Steuerung mehrerer Stellmotoren durch jeweils eine Steuerendstufe zeigt als Endstufenanordnungen die Umschalter 47, 52, 49 gemäß Fig. 1 oder Fig. 4. Die in Fig. 4 (oder auch in Fig. 1) gezeigte Schaltungsanordnung ist als Funktionsblock mit 140 bezeichnet und eingangsseitig an die Positionier-Schaltglieder 11, 12 sowie ausgangsseitig über je ein ODER-Gatter 141, 142 an die Klemmen 46, 51 angeschlossen. Ein zweiter, identischer Funktionsblock 143 wird durch zwei weitere Positionier-Schaltglieder 144, 145 gesteuert und ausgangsseitig ebenfalls an je einen Eingang der ODER-Gatter 141, 142 angeschlossen. Dabei können die Positionier-Schaltglieder 11, 12 z.B. einem ersten Sitz und die Positionier-Schaltglieder 144, 145 einem weiteren Sitz zugeordnet sein, oder aber die weiteren Positionier-Schaltglieder dienen der Verstellung anderer Einrichtungen, wie z.B. Kopfstützen, Lenkrad, Schiebedach oder Rückspiegel. Die Funktionsblöcke 140, 143 sind gemäß Fig. 1 oder Fig. 4 mit der Klemme 60 verbunden. Eine erste Anordnung zweier Stellmotoren 48, 53 ist gemäß den Fig. 1 und 4 zwischen die Umschalter 47, 52, 49 geschaltet. Dabei ist der Verknüpfungspunkt des Umschalters 49 zu den Stellmotoren 53, 48 durch zwei Schaltarme eines Umschalters 146 gegeben. In einer zweiten Schaltstellung verbindet dieser Umschalter 146 den Umschalter 49 mit zwei weiteren Stellmotoren 147, 148, die mit ihrem zweiten Anschluß ebenfalls mit den Umschaltern 47, 52 verbunden sind. Die Positionier-Schaltglieder 144, 145 sind über ein ODER-Gatter 149 mit dem Setzeingang S eines Flipflops 150 verbunden, während die Positionier-Schaltglieder 11, 12 über ein weiteres ODER-Gatter 151 an den Rücksetzeingang R des Flipflops 150 angeschlossen sind. Durch das Ausgangssignal des Flipflops 150 ist der Umschalter 146 steuerbar. Wird eines der Positionier-Schaltglieder 11, 12 betätigt, so wird das Flipflop 150 rückgesetzt und die Schaltarme des Umschalters 146 befinden sich in der gezeichneten Stellung, so daß über die Klemmen 46, 51 die Stellmotoren 48, 53 steuerbar sind. Wird eines der Positionier-Schaltglieder 144, 145 betätigt, so wird das Flipflop 150 gesetzt und der Umschalter 146 wechselt in seine zweite Schaltstellung, so daß über die Klemme 46, 51 die Stellmotoren 147, 148 angesteuert werden können. Durch diese Anordnung können Steuerendstufen mehrfach belegt werden, so daß sich ihre Zahl reduziert, was insbesondere bei einer Vielzahl von Einrichtungen, denen Verstellvorgänge zugeordnet sind, zu einer deutlichen Einsparung führt. Diese als Umschalter 57, 52,

**0 001 297**

49 dargestellten Steuerendstufen sind üblicherweise als Relais oder als Leistungshalbleiter ausgebildet und bilden somit einen beträchtlichen Kostenfaktor.

Will man eine Einrichtung, wie z.B. einen Rückspiegel verstellen, so genügt eine einzige, als Umschalter 47 bzw. 52 ausgebildete Steuerendstufe. Für die beiden Stellmotoren können Kupplungen vorgesehen werden, die durch den Umschalter 49 nacheinander betätigt werden. In der Anordnung gemäß Fig. 1 oder Fig. 4 ist natürlich dazu eine weitere Speichereinrichtung nötig, die aus zwei Speichern für die beiden Verstellebenen besteht. Bei der Betätigung einer Taste, z.B. dem Positionier-Schaltglied 11, wird dann z.B. eine erste Schaltvorrichtung 14 betätigt zur Verstellung eines Sitzes in eine erste Richtung, dann eine Schaltvorrichtung 15 zur Verstellung des Sitzes in eine zweite Richtung, dann eine weitere Vorrichtung zur Verstellung des Spiegels in eine erste Richtung und weiterhin eine vierte Schaltvorrichtung zur Verstellung des Spiegels in eine zweite Richtung.

Die Funktionen der beschriebenen Schaltungsanordnungen, insbesondere der Schaltungsanordnungen gemäß Fig. 1 und Fig. 4 können vorzugsweise durch einen Mikrorechner realisiert werden, insbesondere einen 1-Chip-Mikrorechner, bei dem der Mikroprozessor, die Arbeits- und Festwertspeicher sowie der Taktgenerator auf einem Chip angeordnet sind. Ein solcher Mikrorechner kann nicht nur die Funktionen eines einzelnen Funktionsblocks 140, sondern auch die Funktionen weiterer Funktionsblöcke 143 enthalten. Das System wird dadurch sehr einfach und billig, bei der gleichzeitigen Möglichkeit, eine Vielfalt von Verstellvorrichtungen verschiedenster Systeme zu steuern.

**Patentansprüche**

1. Einrichtung zur Positionierung wenigstens zweier Verstellvorrichtungen (48, 53), insbesondere für Kraftfahrzeugsitze, mit Positionier-Schaltgliedern (11, 12), durch deren Betätigung die Verstellvorrichtungen (48, 53) in jeweils vorwählbare Positionen bewegbar sind, mit wenigstens zwei, den Verstellvorrichtungen (48, 53) zugeordneten Regelkreisen, deren Istwerte über mit den Verstellvorrichtungen (48, 53) gekoppelte mechanisch-elektrische Wandler (40, 42) und deren Sollwerte über wenigstens zwei elektrische Speichervorrichtungen (22, 23 bzw. 24, 25) vorgegeben sind, wobei die Speichervorrichtungen über die zugeordneten Positionier-Schaltglieder (11, 12) in den Regelkreis einschaltbar sind, dadurch gekennzeichnet, daß eine Schaltvorrichtung (56) vorgesehen ist, durch deren erste Schaltstellung für alle Verstellvorrichtungen (48, 53) zuerst eine erste Verstellrichtung vorgebbar ist, daß nach Ablauf von Verstellvorgängen in diese erste Verstellrichtung bei Vorliegen von Soll-Istwert-Abweichungen in den Regelkreisen durch eine Erkennungslogik (63, 62) ein Signal erzeugbar ist, durch das mittels der Schaltvorrichtung (56) allen Verstellvorrichtungen (48, 53) eine zweite, entgegengesetzte Verstellrichtung vorgegeben wird, in die entsprechend Verstellvorgänge bei Vorliegen von Soll-Istwert-Abweichungen ablaufen.

2. Einrichtung nach Anspruch 1, dadurch gekennzeichnet, daß jeder Verstellvorrichtung (48, 53) eine Torstufe (45, 50) vorgeschaltet ist und daß alle Torstufen (45, 50) auf ein Signal eines Positionier-Schaltglieds (11, 12) hin geöffnet werden.

3. Einrichtung nach Anspruch 2, dadurch gekennzeichnet, daß zur Offnung der Torstufen (45, 50) eine bistabile Schaltstufe (57) vorgesehen ist, die in einen ersten stabilen Zustand durch ein Signal eines Positionier-Schaltglieds (11, 12) und die in ihren zweiten stabilen Zustand durch ein Signal einer Erkennungslogik (43, 44) oder des Speicher-Schaltglieds (19) versetzbar ist, wobei das Signal der Erkennungslogik bei Erreichen der vorgewählten Position auslösbar ist.

4. Einrichtung nach einem der Ansprüche 1 bis 3, dadurch gekennzeichnet, daß die Ausgangssignale der in den Regelkreisen enthaltenen Regelverstärker (37, 41) über die den Verstellvorrichtungen (48, 53) zugeordneten Torstufen (45, 50) Umschaltern (47, 52) zuführbar sind, wobei ab einem bestimmten Ausgangspegel der Regelverstärker (37, 41) ein Schalten der Umschalter erreichbar ist.

5. Einrichtung nach einem der vorhergehenden Ansprüche, dadurch gekennzeichnet, daß nach Ablauf von Verstellbewegungen in die erste Verstellrichtung durch die Schaltvorrichtung (56) zur Vorwahl der Verstellrichtungen eine Eingangsgröße der Regelverstärker (37, 41) um einen kleinen Betrag in dem Sinne veränderbar ist, daß die den bereits in die erste Verstellrichtung bewegten Verstellvorrichtungen (48 bzw. 53) zugeordneten Umschalter (47 bzw. 52) geschaltet werden.

6. Einrichtung nach einem der vorhergehenden Ansprüche, dadurch gekennzeichnet, daß ein Positionier-Schaltglied der Türkontakt eines Fahrzeugs ist und daß durch den Türkontakt nur eine der Vorwärts-Rückwärts-Verstellung für einen Fahrzeugsitz zugeordnete Verstellvorrichtung in Rückwärts-Verstellrichtung auslösbar ist.

7. Einrichtung nach einem der vorhergehenden Ansprüche, dadurch gekennzeichnet, daß durch die Positionier-Schaltglieder (11, 12) eine Verzögerungseinrichtung (91) steuerbar ist, durch die bei einer der Verzögerungszeit entsprechender Betätigung eines Positionier-Schaltglieds (11, 12) in den zugeordneten Speichervorrichtungen (22, 23 bzw. 24, 25) ein Umspeichervorgang auslösbar ist.

8. Einrichtung nach einem der vorhergehenden Ansprüche, dadurch gekennzeichnet, daß zur Erkennung des Speicherbefehls das entsprechende Speicherbefehlssignal einer Anzeigevorrichtung zuführbar ist.

9. Einrichtung nach Anspruch 8, dadurch gekennzeichnet, daß das Speicherbefehlssignal kurzzeitig als Verstellbefehlssignal einer Verstellvorrichtung (48) zuführbar ist.

10. Einrichtung nach einem der vorhergehenden Ansprüche, dadurch gekennzeichnet, daß zur Vermeidung geringer Verstellbewegungen gleichzeitig mit dem Verstellbefehl der Sollwert und/oder der Istwert eines Verstellregelkreises um einen geringem Betrag kurzzeitig in dem Sinne verändert wird, daß bei einer zu einer Vergrößerung des Istwerts führenden Verstellrichtung die relative Differenz Sollwert minus Istwert verkleinert und bei einer zu einer Verringung des Istwerts führenden Verstellrichtung die relative Differenz Sollwert minus Istwert um einen geringem Betrag vergrößert wird.

11. Einrichtung für mehrere Verstellvorrichtungen nach einem der vorhergehenden Ansprüche, dadurch gekennzeichnet, daß zur Verringerung des Einschaltstromstoßes die Verstellvorrichtungen (48, 53) sequenziell über eine zeitliche Steuerung (115 bis 118) einschaltbar sind.

12. Einrichtung nach einem der vorhergehenden Ansprüche, dadurch gekennzeichnet, daß der differenzierte Istwert für die Verstellregelkreise mit einem Sollwert für die Verstellgeschwindigkeit verglichen wird und daß bei Unterschreiten dieses Sollwerts bei gleichzeitiger Ansteuerung des zugehörigen Verstellvorgangs eine Abschaltung dieses Verstellvorgangs auslösbar ist.

13. Einrichtung für mehrere Verstellvorrichtungen, nach einem der vorhergehenden Ansprüche dadurch gekennzeichnet, daß zur Einsparung von Steuerendstufen (47, 52) für die Verstellvorrichtungen (48, 53) wenigstens einer Steuerendstufe wenigstens eine weitere Verstellvorrichtung (147, 148) zugeordnet ist und daß eine Umschaltvorrichtung (146) vorgesehen ist, durch die die Steuerendstufen (47, 52) von Verstellvorrichtungen einer Funktionsgruppe (48, 53), insbesondere eines Fahrzeugsitzes, auf Verstellvorrichtungen einer anderen Funktionsgruppe (147, 148), insbesondere eines zweiten Fahrzeugsitzes, umschaltbar sind, wobei die Umschaltvorrichtung (146) durch wenigstens einen der dazugeordneten Funktionsgruppen zugehörigen Schalter (11, 12 bzw. 144, 145) betätigbar ist.

14. Einrichtung nach einem der vorhergehenden Ansprüche, dadurch gekennzeichnet, daß zur Realisierung der verschiedenen Funktionen ein Mikrorechner, vorzugsweise ein 1-Chip-Mikrorechner vorgesehen ist.

**Revendications**

1. Installation pour le positionnement d'au moins deux dispositifs de réglage (48, 53), notamment pour sièges de véhicules automobiles, avec des organes commutateurs de positionnement (11, 12) par la manoeuvre desquels les dispositifs de réglage (48, 53) peuvent être respectivement déplacés dans des positions présélectionnées, avec au moins deux circuits de réglage associés aux dispositifs de réglage (48, 53), dont les valeurs réelles sont prédéterminées par des convertisseurs mécaniques-électriques (40, 42) accouplés avec les dispositifs de réglage (48, 53) et dont les valeurs de consigne sont prédéterminées par au moins deux dispositifs électriques à mémoire (22, 23; 24, 25), les dispositifs à mémoire pouvant être branchés dans le circuit de réglage par les organes commutateurs de positionnement associés (11, 12), caractérisé en ce qu'il est prévu un dispositif de commutation (56) dont la première position de commutation permet de prédéterminer d'abord une première direction de réglage pour tous les dispositifs de réglage (48, 53), en ce qu'après le déroulement des opérations de réglage dans cette première direction de réglage, en présence d'écarts valeur de consigne-valeur réelle dans les circuits de réglage, un signal peut être produit par un montage logique de détection (63, 62), signal par lequel est prédéterminée, au moyen du dispositif de commutation (56), une seconde direction de réglage opposée pour tous les dispositifs de réglage (48, 53), dans laquelle des opérations de réglage appropriées se déroulent en présence d'écarts valeur de consigne-valeur réelle.

2. Installation selon la revendication 1, caractérisée en ce qu'un étage porte (45, 50) est branché devant chaque dispositif de réglage (48, 53) et en ce que tous les étages portes (45, 50) sont ouverts par un signal d'un organe commutateur de positionnement (11, 12).

3. Installation selon revendication 2, caractérisée en ce qu'un étage de commutation bistable (57) est prévu pour l'ouverture des étages portes (45, 50), cet étage de commutation pouvant être déplacé dans un premier état stable par un signal d'un organe commutateur de positionnement (11, 12) et dans son second état stable par un signal d'un montage logique de détection (43, 44) ou de l'organe de commutation à mémoire (19), le signal du montage logique de détection pouvant être déclenché lorsque la position présélectionnée est atteinte.

4. Installation selon l'une des revendications 1 à 3, caractérisée en ce que les signaux de sortie des amplificateurs de réglage (37, 41) contenus dans les circuits de réglage peuvent être envoyés à des inverseurs (47, 52) par l'intermediaire des étages portes (45, 50) associés aux dispositifs de réglage (48, 53), une commutation des inverseurs pouvant être obtenue à partir d'un niveau de sortie déterminé des amplificateurs de réglage (37, 41).

5. Installation selon l'une des revendications précédentes, caractérisée en ce qu'après le déroulement de mouvements de réglage dans la première direction de réglage, une grandeur d'entrée des amplificateurs de réglage (37, 41) peut, pour la présélection des directions de réglage, être modifiée d'une faible valeur dans un sens tel que les inverseurs (47, 52) associés aux dispositifs de réglage (48, 53) déjà déplacés dans la première direction de réglage soient commutés.

6. Installation selon l'une des revendications précédentes, caractérisée en ce qu'un organe commutateur de positionnement est un contact de porte d'un véhicule et en ce que par le contact de porte seul un dispositif de réglage, affecté au réglage vers l'avant et vers l'arrière d'un siège de véhicule, peut être déclenché dans la direction de réglage vers l'arrière.

7. Installation selon l'une des revendications précédentes, caractérisée en ce qu'un dispositif de retardement (91) peut être commandé par les organes commutateurs de positionnement (11, 12), dispositif par lequel, lors de l'actionnement d'un organe commutateur de positionnement (11, 12) correspondant au temps de retardement, une opération de transfert de mémoire peut être déclenchée dans les dispositifs à mémoire associés (22, 23; 24, 25).

8. Installation selon l'une des revendications précédentes, caractérisée en ce que pour détecter l'ordre de mémoire, le signal de mémoire correspondant peut être envoyé à un organe indicateur.

9. Installation selon revendication 8, caractérisée en ce que le signal d'ordre de mémoire peut être envoyé pendant un court instant à un dispositif de réglage (48) en tant que signal d'ordre de réglage.

10. Installation selon l'une des revendications prédédentes, caractérisée en ce que pour éviter de faibles mouvements de réglage, en même temps que l'ordre de réglage, la valeur de consigne et/ou la valeur réelle d'un circuit de réglage est diminuée pendant un court instant d'une faible valeur dans un sens tel que, pour une direction de réglage conduisant à un accroissement de la valeur réelle, la différence relative valeur de consigne moins valeur réelle soit diminuée et que, pour une direction de réglage conduisant à une diminution de la valeur réelle, la différence relative valeur de consigne moins valeur réelle soit accrue d'une faible valeur.

11. Installation pour plusieurs dispositifs de réglage selon l'une des revendications précédentes, caractérisée en ce que, pour réduire le choc de courant de mise en circuit, les dispositifs de manoeuvre (48, 53) peuvent être mis en circuit de façon séquentielle par une commande en fonction du temps (115 à 118).

12. Installation selon l'une des revendications précédentes, caractérisée en ce que la valeur réelle différentiée pour les circuits de réglage est comparée avec une valeur de consigne pour la vitesse de réglage et en ce que lors du passage au-dessous de cette valeur de consigne avec commande simultanée de l'opération de réglage associée, une coupure de cette opération de réglage peut être déclenchée.

13. Installation pour plusieurs dispositifs de réglage selon l'une des revendications précédentes, caractérisé en ce que pour économiser des étages terminaux de commande (47, 52) pour les dispositifs de réglage (48, 53), au moins un autre dispositif de réglage (147, 148) est associé à au moins un étage terminal de commande, et en ce qu'il est prévu un organe commutateur (146) par lequel les étages terminaux de commande (47, 52) de dispositifs de réglage d'un groupe de fonctionnement (48, 53), notamment d'un siège de véhicule, peuvent être commutés sur des dispositifs de réglage d'un autre groupe de fonctionnement (147, 148), notamment d'un second siège de véhicule, l'organe commutateur (146) pouvant être actionné par au moins l'un des commutateurs (11, 12; 144, 145) correspondant aux groupes de fonctionnement intéressés.

14. Installation selon l'une des revendications précédentes, caractérisée en ce que pour la réalisation des diverses fonctions il est prévu une microcalculatrice, de préférence une microcalculatrice à une plaquette.

**Claims**

1. Apparatus for positioning at least two adjusting devices (48, 53), especially for vehicle seats, comprising positioning switches (11, 12) by the actuation of which the adjusting devices (48, 53) can be movable into respective selectable positions, at least two control circuits associated with the adjusting devices (48, 53) the actual values of the circuits being provided by mechanical-electrical converters (40, 42) coupled to the adjusting devices (48, 53) and the set values of the control circuits being provided by at least two electrical storage devices (22, 23 or 24, 25) wherein the storage devices can be switched into the control circuit through the associated positioning switches (11, 12), characterised in that, a switching device (56) is provided through a first switching position of which a first adjusting direction can be provided for all adjusting devices (48, 53), that after a sequence of adjusting operations in this first adjusting direction a signal can be generated in the control circuits by a recognition logic circuit in the presence of set-actual value deviations, through which logic circuit a second opposite adjusting direction is provided for all adjusting devices (48, 53) by means of the switching device (56), in which opposite adjusting direction corresponding adjusting operations proceed in the presence of set-actual value deviations.

2. Apparatus according to claim 1, characterised in that, a gating stage (45, 50) is connected in front of each adjusting device (48, 53) and that all gating stages (45, 50) are opened by a signal from one positioning switch (11, 12).

3. Apparatus according to claim 2, characterised in that, for opening the gating stages (45, 50), a bi-stable switching stage (57) is provided which is switchable into a first stable condition by a signal from a positioning switch (11, 12) and which is switchable into its second stable condition by a signal from a recognition logic circuit (43, 44) or from the storage device switch (19) whereby the signal from the recognition logic circuit can be released on attaining the preselected position.

4. Apparatus according to one of claims 1 to 3, characterised in that, the output signals from the control amplifiers (37, 41) included in the control circuits can be supplied to change-over switches (47, 52) through the gating stages (45, 50) associated with the adjusting devices (48, 53) whereby switching of the change-over switches can be achieved from a predetermined output level at the control amplifiers (37, 41).

5. Apparatus according to one of the preceding claims, characterised in that, for the preselection of the adjusting directions, after a sequence of adjusting movements in the first adjusting direction by the switching device (56), an input value to the control amplifiers (37, 41) is variable by a small amount in the sense in which the change-over switches (47 or 52), associated with the adjusting devices (48 or 53) already moved in the first adjusting direction, are switched.

6. Apparatus according to one of the preceding claims, characterised in that, one positioning switch is the door contact of a vehicle and that only one adjusting device associated with the forwards-backwards-adjustment of a vehicle seat is releasable in a backwards adjusting direction by the door contact.

7. Apparatus according to one of the preceding claims, characterised in that, a delay device (91) is controllable by the positioning switches (11, 12) through which delay device, on actuation of a positioning switch (11, 12) in accordance with the delay time, a change-over storage operation is releasable into the associated storage devices (22, 23 or 24, 25).

8. Apparatus according to one of the preceding claims, characterised in that, for the recognition of the storage command, the corresponding storage command signal can be supplied to an indicating device.

9. Apparatus according to claim 8, characterised in that, the storage command signal can be supplied to an adjusting device (48) temporarily as an adjusting command signal.

10. Apparatus according to one of the preceding claims, characterised in that, for preventing slight adjusting movements simultaneously with the adjusting command, the set value and/or the actual value of an adjusting control circuit is temporarily varied by a small amount in the sense that, with an adjusting direction leading to an increase in the actual value, the relative difference between the set value minus the actual value is reduced and with an adjusting direction leading to a reduction in the actual value, the relative difference between the set value minus the actual value is increased by a small amount.

11. Apparatus for a plurality of adjusting devices according to one of the preceding claims, characterised in that, for reducing the shock of the switching-on current, the adjusting devices (48, 53) can be switched in sequentially by a time control (115, 118).

12. Apparatus according to one of the preceding claims, characterised in that, the differentiated actual value for the adjusting control circuit is compared with the set value for the adjusting speed and that when this set value is not reached on simultaneous control of the associated adjusting operation, a switching-off of the said adjusting operation can be initiated.

13. Apparatus for a plurality of adjusting devices, according to one of the preceding claims, characterised in that, in order to save final control stages (47, 52) for the adjusting devices (48, 53) at least one final control stage is associated with at least one further adjusting device (147, 148) and that a change-over switching device (146) is provided through which the final control stages (47, 52) can be switched over from the adjusting devices of one functional unit (48, 53), especially a vehicle seat, to the adjusting devices for another functional unit (147, 148), especially a second vehicle seat, wherein the change-over switching device (146) is actuable by at least one switch (11, 12 or 144, 145) associated with one of the functional units associated therewith.

14. Apparatus according to one of the preceding claims, characterised in that, a micro computer, preferably a 1-chip micro computer is provided for producing the various functions.

Fig.1

# Fig. 2

# Fig.3

Fig.4

# Fig. 5

# Fig. 6

# 0 001 297

# Fig. 7